# FASCICULE DE BREVET EUROPEEN

(11) **EP 2 081 828 B1**
(45) Date de publication et mention de la délivrance du brevet: **30.11.2011**
(21) Numéro de dépôt: 07821478.0
(22) Date de dépôt: 17.10.2007
(51) Int. Cl.: B64G 1/00, B64G 1/14, B64C 30/00, B64D 27/02

(54) **AERONEF A VOL MIXTE AERODYNAMIQUE ET SPATIAL, ET PROCEDE DE PILOTAGE ASSOCIE**
LUFTFAHRZEUG MIT AERODYNAMISCHEM UND RAUM-HYBRIDFLUG UND ZUGEHÖRIGES FLUGSTEUERVERFAHREN
AIRCRAFT WITH HYBRID AERODYNAMIC AND SPACE FLIGHT, AND ASSOCIATED FLIGHT CONTROL METHOD

(30) Priorité: 20.10.2006 FR 0654420
(43) Date de publication de la demande: 29.07.2009
(73) Titulaire: Astrium SAS, 75016 Paris (FR)
(72) Inventeur: CHAVAGNAC, Christophe, 75017 Paris (FR); BERTRAND, Jérôme, 33160 Saint Aubin de Medoc (FR); LAPORTE-WEYWADA, Hugues, 78350 Les Loges en Josas (FR); POULAIN, Olivier, 13100 Aix en Provence (FR); MATHARAN, Philippe, 65200 Germs sur L'Oussouet (FR); LAINE, Robert, 75015 Paris (FR)
(74) Mandataire: Ilgart, Jean-Christophe
(86) Numéro de dépôt international: PCT/EP2007/061113
(87) Numéro de publication internationale: WO 2008/046872

(56) Documents cités:
- WO-A-98/39207
- FR-A- 1 409 570
- GB-A- 2 176 451
- US-A- 3 104 079
- VARVILL R, BOND A: "The SKYLON Spaceplane" JOURNAL OF THE BRITISH INTERPLANETARY SOCIETY, vol. 57, 2004, pages 22-32, XP002434025

## Description

Le sujet de cette invention est un aéronef a vol mixte aérodynamique et spatial, ainsi que son procédé de pilotage associé.

Le domaine technique de l'invention est celui des avions spatiaux, c'est-à-dire des véhicules capables de décoller du sol comme des avions, d'atteindre l'espace et de revenir en se posant sur Terre, encore comme des avions. Ces véhicules doivent pouvoir emporter une charge utile et offrir des conditions de sécurité adéquates pour des vols habités, tout comme des avions classiques, et ils doivent en particulier être réutilisables, à la différence des fusées, qui sont consommées pendant le lancement à la fin du vol. Le terme d'espace peut être compris selon la terminologie de la Fédération Internationale de l'Aéronautique, qui désigne tout le volume désigné hors de l'atmosphère de la Terre, au-delà de cent kilomètres d'altitude par convention. Il peut aussi être considéré comme le volume où l'atmosphère est trop raréfiée pour permettre le vol des avions classiques.

On peut distinguer entre les avions orbitaux, qui sont capable d'atteindre la vitesse orbitale à une altitude donnée (de l'ordre de 7, 5 Km/s à 200 Km d'altitude), et les avions suborbitaux, qui en sont incapables. Les avions orbitaux sont capables de devenir des satellites restant un temps presque indéfini en orbite après la phase de propulsion, alors que les avions suborbitaux suivant une trajectoire qui les ramène à Terre quand leur phase de propulsion est terminée, au bout d'un temps fini, de l'ordre d'une heure et demie, ou moins. Les avions orbitaux se distinguent des suborbitaux surtout par la quantité d'énergie qu'ils doivent emporter pour atteindre la vitesse orbitale et par la conception particulière qu'ils reçoivent pour résister à l'échauffement beaucoup plus important qu'ils subissent à la rentrée dans l'atmosphère. La présente invention concerne d'abord les avions suborbitaux, mais pas exclusivement puisqu'il serait concevable de l'appliquer à des avions orbitaux avec des modifications quantitatives ou secondaires, et elle peut aussi transporter comme charge utile un véhicule capable du vol orbital.

Contrairement aux fusées qui font déjà l'objet de développements industriels importants, les avions spatiaux sont encore très peu répandus, et beaucoup d'entre eux n'existent qu'à l'état de projet. Un premier exemple est la navette américaine qui n'est pourtant pas un avion spatial pur mais un lanceur mixte bi-étagé, décollant comme une fusée et dont seul le second étage, qui est largué après la phase de décollage, est un planeur spatial. Ce planeur spatial a le double avantage, recherché avec l'invention, de pouvoir être réutilisé et de se poser sur Terre à la façon d'un planeur supersonique, donc à grande vitesse et sans pouvoir corriger une erreur ; mais le premier étage conserve les inconvénients de la fusée, et en premiers lieux l'usage unique et la grosse consommation d'ergol pour s'arracher de l'atmosphère proche.

Un deuxième exemple d'avion spatial a été conçu par la société Scaled Composite ; il est aussi à deux étages. Un premier avion à vol aérodynamique entraîne un autre jusque vers 15 Km d'altitude et le largue. Le second avion a un moteur de fusée anaérobie, capable d'amener la charge utile jusqu'à 100 Km d'altitude. Ce deuxième étage atterrit comme celui de la navette.

Un troisième exemple, sensiblement plus ancien, est le prototype X15 américain, qui était lâché d'un avion porteur et pourrait atteindre une altitude supérieure à 100 Km.

D'autres véhicules spatiaux sont décrits dans le site Internet http://www.spacefuture.com/vehicles/designs.shtml, mais ces véhicules n'ont pas été construits ni mis en service. Certains décollent à la verticale, mais leur mode de propulsion reste aussi coûteux que celui d'une fusée, ou ils sont associés à une fusée qui leur sert de premier étage, comme la navette spatiale américaine.

Les documents EP 0 264 030, GB 2 362 145, WO 98/30 449, WO 01/64513, US 6 119 985, US 6 745 979, US 2005/0279889, US 6 193 187, FR 1 409 520, WO 98/39207 et US 3 104 079 illustrent respectivement un lanceur à deux étages ; un lanceur dont un ballon est le premier étage ; un avion tirant un autre ; un lanceur dont le premier étage est un lanceur à propulsion mixte pour moteurs aéronautiques et propulseurs fusée; un avion spatial s'avitaillant en oxygène ; trois avions à géométrie variable ; un avion classique (à hélice dans la réalisation représentée) auquel ont été ajdointes des tuyères de modification d'orientation, qui sont des moteurs auxiliaires ne participant pas en principe à la propulsion ; un avion spatial pourvu de moteurs à air et de moteurs à propulsion fusée et pouvant être avitaillé en vol ; et un aéronef à aile delta propulsé par une fusée qui se détache ensuite, l'aéronef redescendant en plané.

La plupart des projets d'aéronefs dans l'espace, et les seuls à avoir volé sont donc à étages multiples. Cette conception semble plus avantageuse pour ce qu'elle autorise un rapport entre la masse utile et la masse au décollage plus intéressant, qui donne la possibilité d'associer une quantité de carburant plus grande à la charge utile et donc de la propulser plus loin. Les inconvénients sont que la complexité est beaucoup accrue et que l'étage supérieur a des possibilités de déplacement réduites. Les deux étages doivent être tous deux munis des mêmes moyens pour certaines fonctions, comme les tuyères directionnelles pour ajuster leur orientation, et ils doivent encore comprendre des moyens de séparation. L'étage supérieur n'est pas piloté de façon efficace pour le retour et doit rentrer en vol plané. Cela et la circonstance que les moyens de largage peuvent être sujets à des défaillances rend le vol plus risqué.

Certains aéronefs ont utilisé une propulsion mixte aérobie et anaérobie, pour circuler successivement dans l'atmosphère dense et dans l'espace. Cette idée est exploitée dans l'invention, d'une façon plus efficace toutefois puisque les conceptions antérieures ne peuvent en général pas s'affranchir de la contrainte des étages multiples. La raison principale est dans un choix différent des ailes, puisqu'il est apparu aux présents inventeurs que les ailes généralement proposées pour ces conceptions antérieures étaient des ailes en delta, courtes et à grande flèche vers l'arrière, bien adaptées aux vols supersoniques mais dont la portance est moins bonne. La conception de l'invention utilise au contraire une aile droite et longue, à faible flèche vers l'arrière, pour assurer une bonne portance dans l'atmosphère dense et jusqu'à une altitude élevée. Ces portions du voyage sont accomplies sans inconvénient à vitesse subsonique. La propulsion fusée commence seulement à une altitude assez élevée pour que les efforts aérodynamiques restent supportables par l'aile. Il n'est alors pas nécessaire d'adopter une géométrie variable pour protéger l'aile et réduire la traînée en la repliant contre le fuselage.

Au contraire, on préfère une conception rigide, plus simple, plus légère, nécessitant moins d'entretien et pas susceptible d'avarie.

D'une façon générale, on a cherché à optimiser le vol atmosphérique en termes de consommation, d'altitude et de masse ; on en est venu à adopter le concept du vol subsonique à haute altitude, et cela a permis d'atteindre une optimisation de la masse totale et en particulier de propulsion fusée, puisque moins de masse pour le vol atmosphérique implique moins de poussée et moins de carburant pour le vol fusée, et à nouveau moins de masse et moins de carburant pour le vol atmosphérique : on a pu arriver à un aéronef assez simple, léger et économe en énergie pour emporter lui-même son carburant, sans lanceur auxiliaire séparé ni avitaillement en vol, et apte à commencer et finir le vol à la façon d'un avion classique, avec un pilotage et une orientation horizontale. Il faut souligner l'avantage de pouvoir piloter et diriger l'aéronef pendant le vol de retour, par rapport aux retours planés, pour améliorer la sécurité des vols habités. L'avion pourra ainsi parcourir des distances significatives après son retour dans l'atmosphère et choisir la piste d'atterrissage. La vitesse de fin de vol sera beaucoup plus lente qu'avec un véhicule à ailes delta conçue pour le vol supersonique.

Un objectif de l'invention est d'éliminer les inconvénients des conceptions antérieures et de fournir un aéronef spatial d'un genre nouveau, à étage unique capable de voler correctement, avec des capacités de pilotage entières, à basse altitude tout en pouvant poursuivre son voyage dans l'espace. Cet aéronef aura l'aspect extérieur général d'un avion de transport commercial et différera d'un avion classique par certains aménagements.

Sous une forme générale, l'aéronef de l'invention comprend un fuselage, une aile transversale fixe essentiellement droite et allongée, ayant une envergure plus grande que la longueur du fuselage, des moteurs aéronautiques placés sur le fuselage ou dans le fuselage, et des propulseurs fusée à ergol. Cette constitution garantit de bonnes possibilités de pilotage à basse altitude comme à haute altitude. Les réservoirs d'ergol sont de plus placés dans une portion postérieure du fuselage, l'aile est placée sur ladite portion postérieure, et une portion antérieure du fuselage comprend une cabine pour le pilote et les passagers.

L'aéronef est alors conçu pour le transport de passagers, les charges importantes au décollage étant à l'arrière et l'aile étant déplacée aussi vers l'arrière par rapport aux conceptions classiques d'avions afin de prendre en compte la position très en arrière du centre de gravité.

De préférence, l'envergure de l'aile et la longueur du fuselage sont en rapport compris entre 1 et 2 ; mieux encore, entre 1 et 1,4. La charge alaire (rapport entre la masse totale de l'avion et la surface de l'aile, qui conditionne l'altitude atteinte en subsonique) est de préférence comprise entre 2,5 et 3,3 m² par tonne. La masse à vide est de préférence comprise entre 40% et 60% de la masse en pleine charge. L'aéronef comprend de préférence un empennage en plan canard placé sur ladite portion antérieure. L'empennage en plan canard à l'avant rétablit la stabilité et aide aussi à la portance.

L'invention concerne aussi un procédé de pilotage d'un aéronef comprenant une première étape de vol aérodynamique en recourant à des moteurs aéronautique, une deuxième étape de vol de lancement dans l'espace en recourant à des propulseurs fusée après avoir commandé un changement d'inclinaison de l'aéronef entre la première étape et la deuxième étape, une troisième étape de chute planée avec le fuselage sensiblement perpendiculaire à la trajectoire, et une quatrième étape de vol aérodynamique d'atterrissage après avoir replacé l'aéronef sensiblement en direction de la trajectoire entre la troisième étape de vol et la quatrième étape de vol.

La propulsion fusée est de préférence à poussée variable.

Ces aspects de l'invention ainsi que d'autres seront maintenant décrits en liaison aux figures, dont :

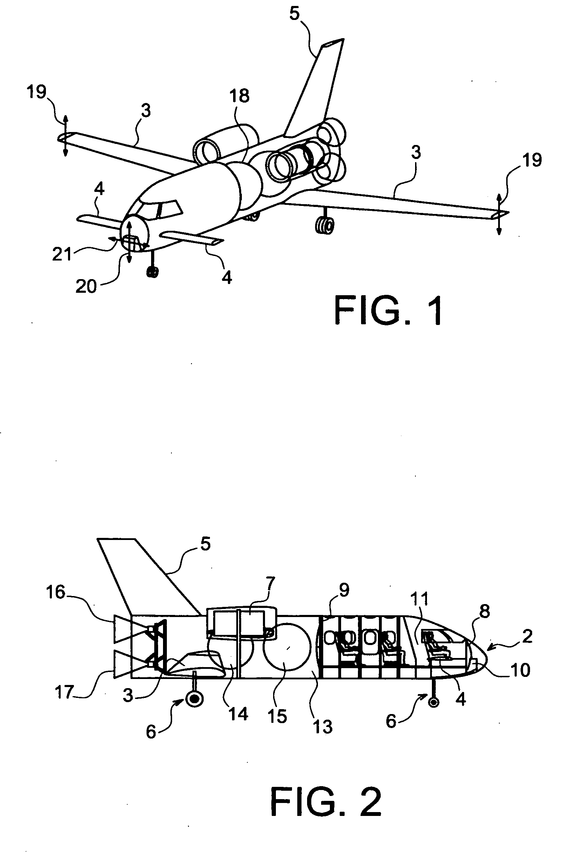

- les figures 1 et 2 sont une vue de biais et une vue de face de l'aéronef,

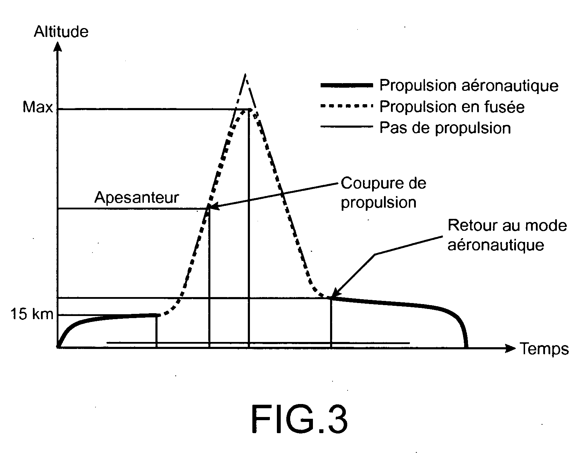

- et la figure 3 illustre une étape du vol.

L'aéronef comprend un fuselage 1 de forme générale cylindrique mais s'effilant à l'avant vers un nez 2. Il dépasse du fuselage 1 une aile 3 transversale à grand allongement en direction latérale de l'aéronef et à faible flèche vers l'arrière et qui est implantée à l'arrière du fuselage 1, à environ 80% de la longueur totale jusqu'à l'avant, un empennage 4 transversal en plan canard à l'avant, non loin du nez 2, et une dérive 5 supérieure à l'arrière, à grande flèche vers l'arrière, analogue à celle d'un avion classique. L'aile 3 est ici placée à une portion inférieure de fuselage 1, mais elle pourrait l'être à mi-hauteur ou à une hauteur élevée. On doit aussi mentionner un train d'atterrissage 6 sous le fuselage 1 et une paire de moteurs aéronautiques 7 (turboréacteurs), situés aussi dans la partie postérieure du fuselage 1 mais un peu en avant de l'aile 3. Les moteurs aéronautiques 7 sont, dans ce mode de réalisation, montés sur les côtés latéraux du fuselage 1 un peu au-dessus de lui par l'intermédiaire de mâts de fixation et de nacelles en s'étendant hors du fuselage 1. Cette conception n'est pas obligatoire et les moteurs aéronautiques 7 pourraient être intégrés à la structure du fuselage 1, des prises d'air de celui-ci offrant un accès à l'air de combustion et une sortie aux gaz de combustion.

Les aménagements intérieurs principaux de l'aéronef sont les suivants. Le volume du fuselage 1 est divisé en trois compartiments principaux par une cloison avant et une cloison arrière 9. Un compartiment antérieur 10 abrité par le nez 2 et à l'avant de la cloison antérieure 8 contient les systèmes de commande. Un compartiment médian 11 est ici une cabine contenant un pilote et les passagers. La cabine est étanche, mise sous pression, munie de portes et de hublots pour l'accès et l'observation, et pourvue d'équipements et de mobilier de transport de personnes. Un compartiment postérieur 13 à l'arrière de la cloison postérieure 9 est affecté à la propulsion. Il comprend de gros réservoirs d'ergol 14 et 15 pouvant alimenter deux propulseurs fusée 16 et 17 placés en parallèle tout à l'arrière de l'aéronef et en dépassant vers l'extérieur. L'utilisation d'une pluralité des propulseurs fusée 16 et 17 (deux ou trois en général) permet de les allumer l'un après l'autre et offre une propulsion plus douce. Un seul propulseur peut être utilisé. Il est alors avantageusement à poussée variable. Le carburant nécessaire aux moteurs aéronautiques 7 est contenu dans l'aile 3. Il existe enfin un réservoir 18 plus petit que les réservoirs d'ergol 14 et 15 et dont la fonction est d'alimenter des tuyères de modification d'orientation de l'aéronef. Certaines de ces tuyères portent la référence 19 et sont placées aux extrémités de l'aile 3, orientées vers le haut et vers le bas pour commander des mouvements de roulis de l'aéronef. D'autres tuyères 20 et 21 sont placées sur le nez 2 de l'aéronef et dirigées dans les directions verticales et horizontales afin de commander des mouvements de tangage et de lacet.

Les moteurs aéronautiques 7 et les propulseurs fusée 16 et 17, tous disposés pour exercer une poussée vers l'avant de l'aéronef et donc le propulser, sont ses moteurs principaux. Les tuyères 20 et 21 sont de petits moteurs auxiliaires sans effet pour la propulsion à proprement parler, puisqu'elles n'exercent qu'une action de rotation par un déplacement en direction latérale.

La réalisation qu'on illustre principalement ici a été conçue pour transporter quatre passagers et un pilote jusqu'à une altitude de 100 Km environ, donc une charge utile de 500 Kg. La longueur de l'aéronef est de 10 à 15 m et son envergure de 15 à 25 m, le fuselage 1 ayant 2 m de hauteur environ et pouvant avoir des sections circulaires ou elliptiques. L'aile 3 a 35 m2 environ de surface, l'empennage 4 une envergure de 6 m et une surface de 5 m2, et la dérive 5 une surface de 10 m2 et 4,5 m de haut environ. Les ergols peuvent être de l'oxygène liquide et du méthane liquide. L'aéronef ayant une masse faible et la masse des ergols étant faible, il devient plus simple et plus fiable. La masse au décollage peut être de 10 à 15 tonnes dont 5 à 7 tonnes de masse à vide, 3 à 5 tonnes d'ergols, 0,5 à 2 tonnes de masse de kérosène, le reste incluant la charge utile. La poussée des moteurs aéronautiques peut être de 3000 à 7000 lbf (13,3 kN à 31,1 kN), la poussée des propulseurs fusée de 150 à 400 kN, et les tuyères 19, 20 et 21 peuvent avoir chacune 400 N de poussée environ. Afin de réduire la masse à vide, la structure de l'aéronef sera avantageusement en matériaux composites de même que les réservoirs, ou en alliage léger à base d'aluminium comme l'aluminium-lithium.

On va maintenant décrire comment l'aéronef accomplit les vols pour lesquels il a été conçu.

Une première étape concerne le décollage et la montée jusqu'à une altitude pouvant atteindre 12, voire 14 à 18 Km environ, de préférence au-dessus des altitudes de la circulation aérienne générale. Seuls les moteurs aéronautiques 7 sont utilisés pour cela. Aucun avitaillement en vol n'est fait, ni en carburant pour les moteurs aéronautiques 7, ni en ergol pour les moteurs fixés 16 et 17 : l'avion emporte tout son combustible. L'aile 3 est conçue pour favoriser la montée jusqu'à cette altitude en offrant la portance nécessaire pour l'atteindre, et étant associé à un vol à vitesse subsonique, de Mach 0,5 à Mach 0,8, ou peut-être mieux encore de Mach 0,5 à Mach 0,6, pour pousser doucement sur l'aéronef tout en le faisant monter le plus haut possible sous consommation importante de carburant ; l'aile 3 est de toute façon mal adaptée aux vitesses supersoniques. Après cette première étape de vol, les propulseurs fusée 16 et 17 sont allumés, les moteurs aéronautiques 7 éteints, et la portance de l'aile 3 est utilisée pour redresser la trajectoire à environ 70° par rapport à l'horizontale. Les efforts sur la structure de l'aéronef sont réduits car l'allumage des propulseurs fusée 16 et 17 commence seulement à cette haute altitude du fait de l'atmosphère rarefiée, ce qui permet de garder une structure légère et, corrélativement, de nécessiter une masse de carburant moins élevée. La masse d'ergol nécessaire est elle-même réduite grâce à l'allumage des propulseurs fusée 16 et 17 à haute attitude, redevable au vol subsonique. Les propulseurs fusée 16 et 17 sont mis en marche successivement afin de limiter les efforts dans la première phase de poussée. Il est prévu de masquer l'entrée d'air des moteurs aéronautiques 7 pour éviter qu'ils soient soumis à des échauffements et des vitesses de gaz excessifs. La vitesse du vol devient supersonique, jusqu'à Mach 3 ou Mach 4 environ. Quand l'ergol a été consommé, les propulseurs de fusée 16 et 17 sont éteints mais l'aéronef continue de s'élever par inertie jusqu'à une altitude pouvant atteindre 80 à 120 Km.

La troisième phase concerne la rentrée dans l'atmosphère, tous les moteurs de propulseurs étant coupés. L'incidence de l'aéronef est voisine de 90°, c'est-à-dire qu'il est orienté avec son extension perpendiculaire à la trajectoire afin d'opposer la plus grande résistance de traînée pour maximiser le freinage. Puis, à une altitude de 40 Km environ, l'incidence est diminuée à 40° environ. Cette mesure devrait permettre de diminuer les efforts aérodynamiques. On cherche que l'accélération subie par les passagers ne dépasse pas 5 g environ.

A l'altitude de 25 Km environ, la vitesse de l'aéronef est redevenue subsonique, l'aéronef reprend une incidence de vol aéronautique, les moteurs aéronautiques 7 sont rallumés ou non, et le retour sur Terre s'effectue soit en vol plané ou en vol motorisé jusqu'à une piste d'atterrissage.

Certaines applications de l'invention peuvent être le tourisme spatial, la réalisation d'expériences en microgravité, l'utilisation de l'aéronef comme premier étage réutilisable d'un satellite, ou le transfert rapide de passagers.

## Revendications

1. Aéronef comprenant un fuselage, une aile (3), des moteurs aéronautiques (7) et des propulseurs fusée (16, 17), où l'aile est fixe, essentiellement droite et allongée en direction latérale du fuselage, et a une envergure plus grande que la longueur du fuselage et une portion antérieure (11) du fuselage comprend une cabine, **caractérisé en ce que** des réservoirs d'ergol (14, 15) sont placés dans une portion postérieure (13) du fuselage (1) et l'aile (3) est placée sur ladite portion postérieure.

2. Aéronef selon la revendication 1, **caractérisé en ce que** l'envergure de l'aile et la longueur du fuselage sont en rapport compris entre 1 et 2.

3. Aéronef selon la revendication 1, **caractérisé en ce que** l'envergure de l'aile et la longueur du fuselage sont en rapport compris entre 1 et 1,4.

4. Aéronef selon l'une quelconque des revendications 1 à 3, **caractérisé en ce qu'**il comprend une charge alaire composée entre 2,5 et 3,3 mètres carrés par tonne.

5. Aéronef selon l'une quelconque des revendications 1 à 4, **caractérisé en ce qu'**il a une masse à vide comprise entre 40% et 60% d'une masse en charge.

6. Aéronef selon l'une quelconque des revendications 1 à 5, **caractérisé en ce que** l'aéronef comprend un empennage (4) placé sur ladite portion antérieure.

7. Aéronef selon l'un quelconque des revendications 1 à 6, **caractérisé en ce qu'**il comprend une paire des propulseurs fusée.

8. Aéronef selon l'une quelconque des revendications 1 à 7, **caractérisé en ce qu'**il comprend un train d'atterrissage (6).

9. Aéronef selon l'une quelconque des revendication 1 à 8, **caractérisé en ce qu'**il comprend des tuyères de modification d'orientation (19, 20, 21), dont des tuyères de commandes de roulis placées sur des bouts des ailes et des tuyères de tangage et de lacet placées à l'avant du fuselage.

10. Procédé de pilotage d'un aéronef comprenant une aile fixe, essentiellement droite et allongée en direction latérale d'un fuselage de l'aéronef, **caractérisé en ce qu'**il comprend une première étape de vol aérodynamique à une vitesse subsonique comprise entre Mach 0,5 et Mach 0,8 en recourant à des moteurs aéronautiques sans avitaillement en vol, une deuxième étape de vol de lancement dans l'espace en recourant à des propulseurs fusée après avoir commandé un changement d'inclinaison de l'aéronef entre la première étape et la deuxième étape, une troisième étape de chute placée avec le fuselage sensiblement perpendiculaire à la trajectoire, et une quatrième étape de vol aérodynamique d'atterrissage après avoir replacé l'aéronef sensiblement en direction de la trajectoire entre la troisième étape de vol et la quatrième étape de vol.

11. Procédé de pilotage d'un aéronef selon la revendication 10, **caractérisé en ce que** la propulsion fusée est à poussée variable.

12. Procédé de pilotage d'un aéronef selon la revendication 10 ou 11, **caractérisé en ce que** la quatrième étape est faite en vol propulsé aérodynamique et subsonique.

13. Procédé de pilotage d'un aéronef selon les revendications 10, 11 ou 12, **caractérisé en ce que** le vol aérodynamique est poursuivi jusqu'à une altitude de 12 km au moins.

14. Procédé de pilotage d'un aéronef selon les revendications 10 à 13, **caractérisé en ce que** le vol aérodynamique s'effectue à une vitesse subsonique comprise entre Mach 0,5 et Mach 0,6.

## Claims

1. Aircraft comprising a fuselage, a wing (3), aeronautical engines (7) and rocket propulsion units (16, 17), wherein the wing is fixed, essentially straight and elongated in the lateral direction of the fuselage, and has a greater span than the length of the fuselage, and a front portion (11) of the fuselage comprises a cabin, **characterised in that** ergol tanks (14, 15) are positioned in a rear portion (13) of the fuselage (1), and the wing (3) is positioned on said rear portion.

2. Aircraft according to claim 1, **characterised in that** the wing span and the length of the fuselage are in a ratio between 1 and 2.

3. Aircraft according to claim 1, **characterised in that** the wing span and the length of the fuselage are in a ratio between 1 and 1.4.

4. Aircraft according to any of claims 1 to 3, **characterised in that** it comprises a surface loading consisting of between 2.5 and 3.3 square metres per tonne.

5. Aircraft according to any of claims 1 to 4, **characterised in that** it has an unladen mass between 40% and 60% of a laden mass.

6. Aircraft according to any of claims 1 to 5, , **characterized in that** the aircraft comprises a tail group (4) positioned on said front portion.

7. Aircraft according to any of claims 1 to 6, **characterised in that** it comprises a pair of the rocket propulsion units.

8. Aircraft according to any of claims 1 to 7, **characterised in that** it comprises a landing gear (6).

9. Aircraft according to any of claims 1 to 8, **characterised in that** it comprises orientation modification nozzles (19, 20, 21), including rolling control nozzles positioned on wing tips and pitching and yaw nozzles positioned at the front of the fuselage.

10. Piloting method of an aircraft comprising a fixed, essentially straight and elongated wing in the lateral direction of a fuselage of the aircraft, **characterised in that** it comprises a first aerodynamic flight step at a subsonic speed between Mach 0.5 and Mach 0.8 using aeronautical engines without in-flight refuelling, a second space launch flight step using rocket propulsion units after controlling an aircraft inclination change between the first step and the second step, a third gliding descent step with the fuselage substantially perpendicular to the trajectory, and a fourth aerodynamic flight landing step after repositioning the aircraft substantially in the direction of the trajectory between the third flight step and the fourth flight step.

11. Aircraft piloting method according to claim 10, **characterised in that** the rocket propulsion is with variable thrust.

12. Aircraft piloting method according to claim 10 or 11, **characterised in that** the fourth step is performed in aerodynamic propelled and subsonic flight.

13. Aircraft piloting method according to claims 10, 11 or 12, **characterised in that** the aerodynamic flight is continued to an altitude of at leat 12 km.

14. Aircraft piloting method according to claims 10 to 13, **characterised in that** the aerodynamic flight is performed at a subsonic speed between Mach 0.5 and Mach 0.6.

## Patentansprüche

1. Luftfahrzeug, umfassend einen Rumpf, einen Flügel (3), Flugtriebwerke (7) und Raketentriebwerke (16, 17), bei dem der Flügel fix bzw. unveränderlich ist, im Wesentlichen geradlinig und langgestreckt in seitlicher Richtung des Rumpfes, und eine Spannweite hat, die größer ist als die Länge des Rumpfes, und ein vorderer Abschnitt (11) des Rumpfes eine Kabine enthält,
dadurch gekenntzeichnet, dass die Ergoltanks (14, 15) sich in einem hinteren Teil (13) des Rumpfes (1) befinden und der Flügel (3) an dem genannten hinteren Teil angebracht ist.

2. Luftfahrzeug nach Anspruch 1, **dadurch gekennzeichnet, dass** Verhältnis aus Flügelspannweite und Rumpflänge zwischen 1 und 2 enthalten ist.

3. Luftfahrzeug nach Anspruch 1, **dadurch gekennzeichnet, dass** Verhältnis aus Flügelspannweite und Rumpflänge zwischen 1 und 1,4 enthalten ist.

4. Luftfahrzeug nach einem der Ansprüche 1 bis 3, **dadurch gekennzeichnet, dass** es eine Gesamtoberflächenbelastung zwischen 2,5 und 3,3 Quadratmeter pro Tonne umfasst.

5. Luftfahrzeug nach einem der Ansprüche 1 bis 4, **dadurch gekennzeichnet, dass** es eine zwischen 40% und 60% einer Lastmasse enthaltene Leermasse hat.

6. Luftfahrzeug nach einem der Ansprüche 1 bis 5, **dadurch gekennzeichnet, dass** das Luftfahrzeug ein in dem genannten vorderen Abschnitt angebrachtes Leitwerk (4) umfasst.

7. Luftfahrzeug nach einem der Ansprüche 1 bis 6, **dadurch gekennzeichnet, dass** es ein Raketentriebwerkspaar umfasst.

8. Luftfahrzeug nach einem der Ansprüche 1 bis 7, **dadurch gekennzeichnet, dass** es ein Fahrwerk (6) umfasst.

9. Luftfahrzeug nach einem der Ansprüche 1 bis 8, **dadurch gekennzeichnet, dass** es Richtungsänderungsdüsen (19, 20, 21) umfasst, darunter an den Flügelenden angebrachte Rollsteuerungsdüsen und an der Vorderseite des Rumpfes angebrachte Nick- und Giersteuerungsdüsen.

10. Steuerungsverfahren für ein Luftfahrzeug mit einem unveränderbaren Flügel, im Wesentlichen geradlinig und langgestreckt in seitlicher Richtung eines Flugzeugrumpfes, **dadurch gekennzeichnet, dass** es umfasst: eine erste Phase, gebildet durch einen zwischen Mach 0,5 und Mach 0,8 enthaltenen aerodynamischen Unterschallgeschwindigkeitsflug, wobei Flugtriebwerke ohne Flugbetankung eingesetzt werden, eine zweite Phase oder Raumflugstartphase, wobei Raketentriebwerke eingesetzt werden, nachdem zwischen der ersten Phase und der zweiten Phase eine Änderung des Neigungswinkels des Flugzeugs gesteuert worden ist, eine dritte Phase oder Fall-Phase, mit im Wesentlichen senkrecht zur Flugbahn ausgerichtetem Rumpf, und eine vierte Phase oder aerodynamische Landeflugsphase, nachdem das Luftfahrzeug zwischen der dritten Flugphase und der vierten Flugphase im Wesentlichen wieder entsprechend der Flugbahn ausgerichtet worden ist.

11. Steuerungsverfahren eines Luftfahrzeugs nach Anspruch 10, **dadurch gekennzeichnet, dass** die Schubkraft des Raketenantriebs variabel ist.

12. Steuerungsverfahren eines Luftfahrzeugs nach Anspruch 10 oder 11, **dadurch gekennzeichnet, dass** die vierte Phase einen angetriebenen Flug, aerodynamisch und im Unterschallgeschwindigkeitsbereich, umfasst.

13. Steuerungsverfahren eines Luftfahrzeugs nach den Ansprüchen 10, 11 oder 12, **dadurch gekennzeichnet, dass** der aerodynamische Flug bis zu einer Höhe von mindestens 12 km fortgesetzt wird.

14. Steuerungsverfahren eines Luftfahrzeugs nach den Ansprüchen 10 bis 13, **dadurch gekennzeichnet, dass** der aerodynamische Flug mit einer Unterschallgeschwindigkeit zwischen 0,5 Mach und 0,6 Mach erfolgt.
